(19) **Europäisches Patentamt / European Patent Office / Office européen des brevets**

(11) **EP 4 194 970 A1**

(12) **EUROPEAN PATENT APPLICATION**

(43) Date of publication:
**14.06.2023 Bulletin 2023/24**

(51) International Patent Classification (IPC):
**G05B 13/02** (2006.01)

(21) Application number: **22212043.8**

(22) Date of filing: **07.12.2022**

(52) Cooperative Patent Classification (CPC):
**G05B 13/027**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2021 FR 2113167**

(71) Applicants:
• **Commissariat à l'énergie atomique
et aux énergies alternatives
75015 Paris (FR)**
• **Centre national de la recherche scientifique
75016 Paris (FR)**
• **Université Grenoble Alpes
38400 Saint-Martin-d'Hères (FR)**

• **Universite De Chambery
Universite Savoie Mont Blanc
73011 Chambery Cedex (FR)**

(72) Inventors:
• **SOLINAS, Miguel Angel
38054 Grenoble Cedex 09 (FR)**
• **REYBOZ, Marina
38054 Grenoble Cedex 09 (FR)**
• **MERMILLOD, Martial
38040 Grenoble Cedex 09 (FR)**
• **ROUSSET, Stéphane
38040 Grenoble Cedex 09 (FR)**
• **MOELLIC, Pierre-Alain
38040 Grenoble Cedex 09 (FR)**

(74) Representative: **Cabinet Beaumont
4, Place Robert Schuman
B.P. 1529
38025 Grenoble Cedex 1 (FR)**

(54) **METHOD AND DEVICE FOR CONTROLLING A SYSTEM USING AN ARTIFICIAL NEURAL NETWORK BASED ON CONTINUAL LEARNING**

(57) The present disclosure relates to a control system comprising:
- a computation device (301) implementing at least a first artificial neural network (Net_1);
- one or more sensors (320) configured to capture input data samples; and
- one or more actuators (322);
wherein the computation device (301) is configured to:
generate at least one pseudo-data sample by:
a) iterative sampling one of the base data samples towards one of the decision boundaries to generate one or more modified base data samples; and
b) selecting one or more of the modified base data samples to form the pseudo-data sample.

Fig 3

**Description**

Technical field

The present disclosure relates generally to methods and devices for controlling systems, and in particular to methods and devices employing artificial neural networks.

Background art

Artificial neural networks (ANNs) are architectures that aim to mimic, to some extent, the behavior of a human brain. Such networks are generally formed of neuron circuits, and interconnections between the neuron circuits, known as synapses.

As known by those skilled in the art, ANN architectures, such as multi-layer perceptron architectures, or deep neural networks, including convolutional neural networks, comprise an input layer of neuron circuits, one or more hidden layers of neuron circuits, and an output layer of neuron circuits. Each of the neuron circuits in the hidden layer or layers applies an activation function, (for instance a sigmoid function) to inputs received from the previous layer in order to generate an output value. The inputs are weighted by trainable parameters $\theta$ at the inputs of the neurons of the hidden layer or layers. While the activation function is generally selected by the designer, the parameters $\theta$ are found during training.

While deep learning has yielded remarkable results in a wide range of applications, it can struggle in realistic scenarios when the distribution of training data only becomes available over the course of training. Indeed, it is generally desired that an ANN is capable of easily adapting to learn new information, but a drawback of this plasticity is that it is often difficult to build upon a trained model while conserving a mapping function that has already been learnt. The tendency of ANNs to forget completely and abruptly previously learned information upon learning new information is known in the art as *catastrophic forgetting.*

While a solution could be to store all, or some, historic training data in a buffer and to present the ANN with a mix of the historic training data interspersed with a new information, such an approach would involve the use of a memory in order to store the historic training data. Therefore, this is not a practical solution for resource frugal applications.

There is thus a need for a system and method for addressing the catastrophic forgetting problem during the training of an ANN, and thus improve the control of systems that is a function of the ANN accuracy.

Summary of Invention

It is an aim of embodiments of the present disclosure to at least partially address one or more needs in the prior art.

According to one aspect, there is provided a control system comprising: a computation device implementing at least a first artificial neural network, the first artificial neural network having a first state after having been trained to classify input data samples into a plurality of known classes separated by one or more decision boundaries, the computation device comprising a memory buffer storing one or more base data samples, each base data sample comprising an input data sample and a corresponding class among the plurality of known classes; one or more sensors configured to capture input data samples; and one or more actuators; wherein the computation device is configured to: generate at least one pseudo-data sample; train the first artificial neural network to learn one or more new classes in addition to the plurality of known classes using the at least one pseudo-data sample; classify a new input data sample using the first artificial neural network; and control the one or more actuators as a function of the classification of the new input data sample, wherein the computation device is configured to generate each of the at least one pseudo-data sample by: a) iterative sampling one of the base data samples towards one of the decision boundaries to generate one or more modified base data samples; and b) selecting one or more of the modified base data samples to form the pseudo-data sample.

According to one embodiment, the computation device further implements a second artificial neural network, the second artificial neural network also having been trained to classify the input data samples into the plurality of known classes separated by one or more decision boundaries, or having been programmed to memorize the first state of the first artificial neural network.

According to one embodiment, the computation device is further configured, prior to generating the at least one pseudo-data sample, to at least partially transfer knowledge held by the first artificial neural network to the second artificial neural network, wherein the at least one pseudo-data sample is generated using the second artificial neural network, and wherein the training of the first artificial neural network is performed at least partially in parallel with the generation of one or more pseudo-data samples by the second artificial neural network.

According to one embodiment, the one or more sensors comprise an image sensor, the input data samples being one or more images captured by the image sensor, and the computation device being configured to perform said classification of the new input data sample by image processing of the new input data sample using the first artificial neural network.

According to one embodiment, the computation device is configured to repeat the operations a) and b) for each class previously learnt by the first artificial neural network, except the class of the base data sample.

According to one embodiment, the computation device is configured to generate each of the one or more modified base data samples of the iteration i+1 based on the following equation:

[Math 1]

$$\dot{x}_{i+1}^c = x_i^c - \eta(\mathcal{L}_c(x_i^c) + \varepsilon)\frac{\nabla\mathcal{L}_c(x_i^c)}{\left\|\mathcal{L}_c(x_i^c)\right\|_2}$$

where $x_i^c$ is the base data sample of the iteration i towards a target class c, $\mathcal{L}_c(x_i^c)$ is a loss function of $x_i^c$, $\nabla\mathcal{L}_c(x_i^c)$ is the gradient of the loss function $\mathcal{L}_c(x_i^c)$, $\varepsilon$ is a perturbation, and $\eta$ is a modification rate from one iteration to the next, wherein the loss function of $x_i^c$ is for example determined based on the following equation:

[Math 2]

$$\mathcal{L}_c(x) = Net\_2b(x) - Net\_2c(x)$$

where **Net_2b(x)** is the classification output of the base data sample, and **Net_2c(x)** is the classification output of the target class c.

According to one embodiment, the computation device is further configured to: detect, using a novelty detector, whether one or more new input data samples correspond to a class that is not already known to the first artificial neural network.

According to one embodiment, the computation device is configured to perform the iterative sampling over a plurality of iterations until an iteration I at which a stop condition is met, the stop condition being one of the following, or a combination thereof:

1) iteration I corresponds to a maximum number N of iterations, where N is for example between 4 and 30;
2) a class boundary between the base class of the base data sample and the target class has been reached and/or crossed by the modified base data sample of the iteration I;
3) the activation value at the output of the first artificial neural network resulting from the modified base data sample of iteration i has exceeded a threshold.

According to a further aspect, there is provided a method of controlling one or more actuators, the method comprising: implementing at least a first artificial neural network using a computation device, the first artificial neural network having a first state after having been trained to classify input data samples into a plurality of known classes separated by one or more decision boundaries, the computation device comprising a memory buffer storing one or more base data samples, each base data sample comprising an input data sample and a corresponding class among the plurality of known classes; generating at least one pseudo-data sample; training the first artificial neural network to learn one or more new classes in addition to the plurality of known classes using the at least one pseudo-data sample; capturing, using one or more sensors, a new input data sample; classifying the new input data sample using the first artificial neural network; and controlling the one or more actuators as a function of the classification of the new input data sample, wherein generating each of the at least one pseudo-data sample comprises:

a) iteratively sampling one of the base data samples towards one of the decision boundaries to generate one or more modified base data samples; and
b) selecting one or more of the modified base data samples to form the pseudo-data sample.

According to one embodiment, the method further comprises implementing a second artificial neural network using the computation device, the second artificial neural network also having been trained to classify the input data samples into the plurality of known classes separated by one or more decision boundaries, or having been programmed to memorize the first state of the first artificial neural network.

According to one embodiment, the method further comprises, prior to generating the at least one pseudo-data sample, at least partially transferring knowledge held by the first artificial neural network to the second artificial neural network, wherein the at least one pseudo-data sample is generated using the second artificial neural network, and wherein the training of the first artificial neural network is performed at least partially in parallel with the generation of one or more pseudo-data samples by the second artificial neural network.

According to one embodiment, the one or more sensors comprise an image sensor, the input data samples being one or more images captured by the image sensor, and classifying the new input data sample comprises image processing of the new input data sample using the first artificial neural network.

According to one embodiment, generating each of the one or more modified base data samples of the iteration i+1 is performed based on the following equation:

[Math 3]

$$\dot{x}_{i+1}^c = x_i^c - \eta(\mathcal{L}_c(x_i^c) + \varepsilon)\frac{\nabla\mathcal{L}_c(x_i^c)}{\|\mathcal{L}_c(x_i^c)\|_2}$$

where $x_i^c$ is the base data sample of the iteration i towards a target class c, $\mathcal{L}_c(x_i^c)$ is a loss function of $x_i^c$, $\nabla\mathcal{L}_c(x_i^c)$ is the gradient of the loss function $\mathcal{L}_c(x_i^c)$, $\varepsilon$ is a perturbation, and $\eta$ is a modification rate from one iteration to the next, wherein the loss function of $x_i^c$ is for example determined based on the following equation:

[Math 4]

$$\mathcal{L}_c(x) = Net\_2b(x) - Net\_2c(x)$$

where *Net_2b(x)* is the classification output of the base data sample, and **Net_2c(x)** is the classification output of the target class c.

According to one embodiment, the method further comprises: detecting, using a novelty detector, whether one or more new input data samples correspond to a class that is not already known to the first artificial neural network.

According to one embodiment, the iterative sampling is performed over a plurality of iterations until an iteration I at which a stop condition is met, the stop condition being one of the following, or a combination thereof:

1) iteration I corresponds to a maximum number N of iterations, where N is for example between 4 and 30;
2) a class boundary between the base class of the base data sample and the target class has been reached and/or crossed by the modified base data sample of the iteration I;
3) the activation value at the output of the first or second artificial neural network resulting from the modified base data sample of iteration i has exceeded a threshold.

According to one embodiment, the stop condition is that the iteration I corresponds to a maximum number N of iterations, the method further comprising a calibration phase before the iteratively sampling, the calibration phase determining a value of N based on a number of iterations taken to reach a class boundary.

Brief description of drawings

The foregoing features and advantages, as well as others, will be described in detail in the following description of specific embodiments given by way of illustration and not limitation with reference to the accompanying drawings, in which:

Figure 1 schematically illustrates a multi-layer perceptron ANN architecture according to an example embodiment;

Figure 2 shows four graphs representing an example of the catastrophic forgetting problem;

Figure 3 is a block diagram representing a control system according to an example embodiment of the present disclosure;

Figure 4 represents phases in a method of continual learning in an ANN according to an example embodiment of the present disclosure;

Figure 5 is a flow diagram illustrating operations in a method of controlling actuators using continual learning according to an example embodiment of the present disclosure;

Figure 6 is a flow diagram illustrating an iterative sampling operation of the method of Figure 5 in more detail according to an example embodiment of the present disclosure;

Figure 7 illustrates a 2-dimensional space providing an example of a model that classifies elements into one of five classes, and an example of a trajectory of a sample in this space;

Figure 8 shows six graphs presenting accuracy results obtained using the method and device described herein;

Figure 9A illustrates a hardware control device according to an example embodiment of the present disclosure and represents modules for processing input data falling within a previously learnt dataset; and

Figure 9B illustrates the hardware control device of Figure 9A according to an example embodiment of the present disclosure and represents modules for processing new input data.

Description of embodiments

Like features have been designated by like references in the various figures. In particular, the structural and/or functional features that are common among the various embodiments may have the same references and may dispose identical structural, dimensional and material properties.
Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.
In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.
Unless specified otherwise, the expressions "around", "approximately", "substantially" and "in the order of" signify within 10 %, and preferably within 5 %.
In the following description, the following terms will be assumed to have the following definitions:

- "new input data samples" or "new task data samples": data samples collected and used to train an untrained ANN, this input data being designated as "real" because it is not computer-generated data, and is not therefore synthetic;
- "pseudo-data samples": computer generated synthetic data that can be used as training data, each sample for example comprising an input data sample and a class associated with the input data sample; and
- "adversarial data sample": a data sample that has been specifically generated in order to fool the data processing system into processing it as regular data. For example, adversarial data is crafted in order to take advantage of imprecisions in a classification function implemented by a data processing system.

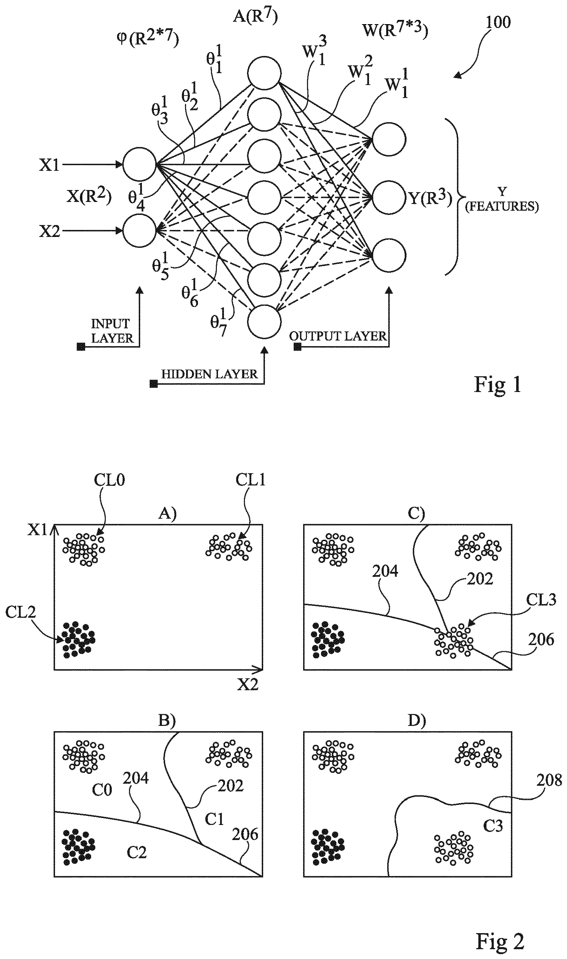

Figure 1 illustrates a multi-layer perceptron (MLP) ANN architecture 100 according to an example embodiment.
The ANN architecture 100 according to the example of Figure 1 comprises three layers, in particular an input layer (INPUT LAYER), a hidden layer (HIDDEN LAYER), and an output layer (OUTPUT LAYER). In alternative embodiments, there could be more than one hidden layer. Each layer for example comprises a number of neurons. For example, the ANN architecture 100 defines a model in a 2-dimensional space, and there are thus two visible neurons in the input layer receiving the corresponding values X1 and X2 of an input X. The model has a hidden layer with seven output hidden neurons, and thus corresponds to a matrix of dimensions $\mathbb{R}^{2*7}$. The ANN architecture 100 of Figure 1 corresponds to a classifying network, and the number of neurons in the output layer thus corresponds to the number of classes, the example of Figure 1 having three classes.

The mapping $y = f(x)$ applied by the ANN architecture 100 is a functions aggregation, comprising an associative function $g_n$ within each layer, these functions being connected in a chain to map $y = f(x) = g_1(g_2(...(g_n(x))...))$. There are just two such functions in the simple example of Figure 1, corresponding to those of the hidden layer and the output layer.

Each neuron of the hidden layer receives the signal from each input neuron, a corresponding parameter $\theta_j^i$ being applied to each neuron j of the hidden layer from each input neuron i of the input layer. Figure 1 illustrates the parameters $\theta_1^1$ to $\theta_7^1$ applied to the outputs of a first of the input neurons to each of the seven hidden neurons.

The goal of the neural model defined by the architecture 100 is to approximate some function $F : X \rightarrow Y$ by adjusting the set of parameters $\theta$. The model corresponds to a mapping $y_p = f(x;\theta)$, the parameters $\theta$ for example being modified during training based on an objective function, such as a cost function. For example, the objective function is based on the difference between ground truth $y_t$ and output value $y_p$. In some embodiments, the mapping function is based on a non-linear projection $\varphi$, generally called the activation function, such that the mapping function $f$ can be defined as $y_p = f(x; \theta, w) = \varphi(x; \theta)^T w$, where $\theta$ are the parameters of $\varphi$, and w is a vector value. In general, a same function is used for all layers, but it is also possible to use a different function per layer. In some cases, a linear activation function $\varphi$ could also be used, the choice between a linear and non-linear function depending on the particular model and on the training data.

The vector value w is for example valued by the non-linear function $\varphi$ as the aggregation example. For example, the vector value w is formed of weights W, and each neuron k of the output layer receives the outputs from each neuron j of the hidden layer weighted by a corresponding one of the weights $W_j^k$. The vector value can for example be viewed as another hidden layer with a non-linear activation function $\varphi$ and its parameters W. Figure 1 represents the weights $W_1^1$ to $W_1^3$ applied between the output of a top neuron of the hidden layer and each of the three neurons of the output layer.

The non-linear projection $\varphi$ is for example manually selected, for example as a sigmoid function. The parameters $\theta$ of the activation function are, however, learnt by training, for example based on the gradient descent rule. Other features of the ANN architecture, such as the depth of the model, the choice of optimizer for the gradient descent and the cost function, are also for example selected manually.

There are two procedures that can be applied to an ANN such as the ANN 100 of Figure 1, one being a training or backward propagation procedure in order to learn the parameters $\theta$, and the other being an inference or feedforward propagation procedure, during which input values X flow through the function, and are multiplied by the intermediate computations defining the mapping function $f$, in order to generate an output $y$.

As explained in the background section above, in some embodiments, an ANN such as the ANN 100 of Figure 1 can struggle in realistic scenarios when the distribution of training data only becomes available over the course of training, or when new classes of input data are to be learned during the lifetime of the ANN. Indeed, it is generally desired that an ANN is capable of easily adapting to learn new information, but a drawback of this plasticity is that it is often difficult to build upon a trained model while conserving a previous mapping function. The problem of catastrophic forgetting will now be described in more detail with reference to Figure 2.

Figure 2 shows four graphs A), B), C) and D) representing an example of the catastrophic forgetting problem. The example of Figure 2 is based on an ANN, such as the ANN 100 of Figure 1, learning four classes in two steps.

The graph A) of Figure 2 illustrates an example of a 2-dimensional space containing three clusters CL0, CL1 and CL2 of training samples each having a pair of values X1 and X2, which will be referred to herein as features, and that are to be used to train the ANN. The three clusters CL0, CL1 and CL2 respectively correspond to samples falling into three classes C0, C1 and C2, and the ANN is to be trained to learn these three classes in parallel.

The graph B) of Figure 2 illustrates the same 2-dimensional space as the graph A) after a first step of training of the three classes C0, C1 and C2 based on the clusters CL0, CL1 and CL2 of training samples. In particular, the graph B) illustrates an example of class boundaries 202, 204 and 206 that have been learnt by the ANN, the boundary 202 separating the classes C0 and C1, the boundary 204 separating the classes C0 and C2, and the boundary 206 separating the classes C1 and C2.

The graph C) of Figure 2 illustrates the same 2-dimensional space and class boundaries as the graph B), and additionally illustrates a further cluster CL3 of training samples to be learnt by the ANN during a second step of training, these training samples falling within a fourth class C3.

The graph D) of Figure 2 illustrates the 2-dimensional space after learning the new class C3 during the second training step. As illustrated, a new boundary 208 has been learnt that separates the class C3 from the other three classes, but the previously learnt class boundaries between the classes C0, C1 and C2 have been lost. Thus, the ANN is no longer able to separate the classes C0, C1 and C2.

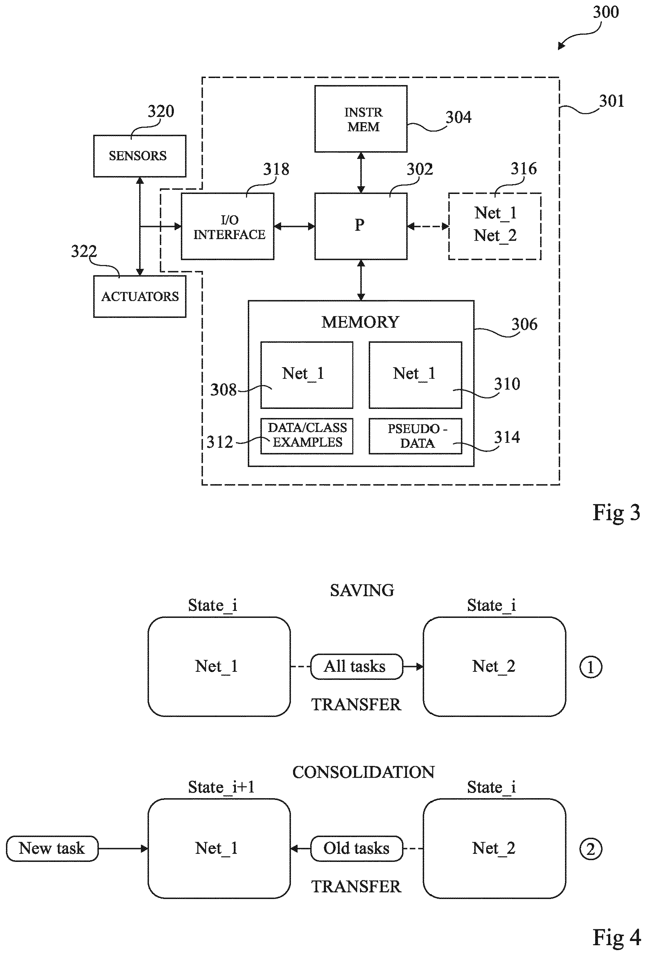

Figure 3 is a block diagram representing a control system 300 according to an example embodiment of the present disclosure. For example, the control system 300 comprises a computation device 301. In some embodiments, the computation device 301 is an Edge AI (Artificial Intelligence) device, which is a device combining artificial intelligence processing capabilities with Edge computing.

The computation device 301 for example comprises a processing device (P) 302 having one or more CPUs (Central Processing Units) under control of instructions stored in an instruction memory (INSTR MEM) 304. Alternatively, rather than CPUs, the computation device 301 could comprise one or more NPUs (Neural Processing Units), or GPUs (Graphics Processing Units), under control of the instructions stored in the instruction memory 304.

A further memory (MEMORY) 306, which may be implemented in a same memory device as the memory 304, or in a separate memory device, for example stores artificial neural networks Net_1 and Net_2 in respective memory locations 308, 310, such that a computer emulation of these ANNs is possible. Each of the ANNs Net_1, Net_2 is for example an MLP similar to the one described in relation to Figure 1, or another type of ANN having a learning function.

For example, the ANNs Net_1 and Net_2 are fully defined as part of a program stored by the instruction memory 304, including the definition of the structure of each ANN, i.e. the number of neurons in the input and output layers and in the hidden layers, the number of hidden layers, the activation functions applied by the neuron circuits, etc. Furthermore, parameters of each ANN learnt during training, such as its parameters and weights, are for example stored in the regions 308 and 310 of the memory 306. In this way, the ANNs Net_1 and Net_2 can be trained and/or operated within the computing environment of the computation device 301.

The memory 306, or another memory device coupled to the processing device 302, for example comprises a memory buffer 312 storing examples of data/class tuples (DATA/CLASS EXAMPLES). These examples correspond for example to selected input data from each of the classes that have already been learnt by the ANNs, along with the corresponding class, which may be in the form of logits. These example data tuples are referred to herein as base data samples.

The memory 306, or another memory device coupled to the processing device 302, also for example comprises a further memory buffer 314 storing pseudo-data samples (PSEUDO-DATA) generated based the base data samples from the memory buffer 312, as will be described in more detail below.

Rather than the ANNs Net_1 and/or Net_2 being implemented entirely by software emulations, it would alternatively be possible for either or both of these ANNs to be implemented at least partially by one or more hardware circuits 316 represented by dashed lines in Figure 3.

The control system 300 also for example comprises an input/output interface (I/O INTERFACE) 318 via which new stimuli is for example received, and from which results data can be output from the ANNs. In particular, the control system 300 for example comprises one or more sensors (SENSORS) 320, and one or more actuators (ACTUATORS) 322, coupled to the input/output interface 318.

The one or more sensors 320 for example comprise one or more image sensors, depth sensors, heat sensors, microphones, or any other type of sensor. For example, the one or more sensors 320 comprise an image sensor having a linear or 2-dimensional array of pixels. The image sensor is for example a visible light image sensor, an infrared image sensor, an ultrasound image senor, or an image depth sensor, such as a LIDAR (LIght Detection And Ranging) image sensor. In this case, input data samples captured by the sensors 320 and provided to the computation device 301 are images, and the computation device 301 is configured to perform image processing on the images in order to determine one or more actions to be applied via the actuators 322. Continuous learning is important in such imaging processing applications in order for example to cope with previously unknown driving conditions, such as driving in snow or at night, or in order to recognize previously unknown road signage, such as signage present in a new country.

The one or more actuators 322 for example comprise a robotic system, such as a robotic arm trained to pull up weeds, or to pick ripe fruit from a tree, an automatic steering or breaking systems in a vehicle, or an electronic actuator, which is for example configured to control the operation of one or more circuits, such as waking up a circuit from sleep mode, causing a circuit to enter into a sleep mode, causing a circuit to generate a text output, to perform a data encoding or decoding operation, etc.

According to a further example, the one or more sensors are interior and/or exterior temperature sensors of a building heating and/or cooling system, comprising for example a heat pump as the main energy source. In such a case, the one or more actuators are for example activation circuits that activate the heating or cooling systems. Continuous learning is important in such applications in order to be able to adapt to previously unknown conditions, such as extreme temperatures, the occupants of the building leaving on vacation, the routines of the occupants of the building being affected by strike action, etc.

Figure 4 represents phases in a method of continual learning according to an example embodiment of the present disclosure, this method for example being implemented by the computation device 301 of Figure 3. The method for example involves the use of the two ANNs Net_1 and Net_2, which may or may not have identical models. The ANN Net_2 is for example used as a memory model, in order to preserve a stable state of the ANN Net_1 before it is updated, through learning a new task. In some embodiments, the ANNs Net_1 and Net_2 are similar to each other, for example having, as a minimum level of similarity, the same numbers of neurons in their input layers and the same numbers of neurons in their output layers. In some embodiments, these ANNs also have the same number of hidden layers, and of neurons, as each other.

Initially, the ANN Net_1 has a state State_i. The "state" of an ANN corresponds for example to the particular values of the parameters $\theta$ and weights W stored by the ANN. The state State_i of Net_1 has for example been programmed using a learning process based on training data.

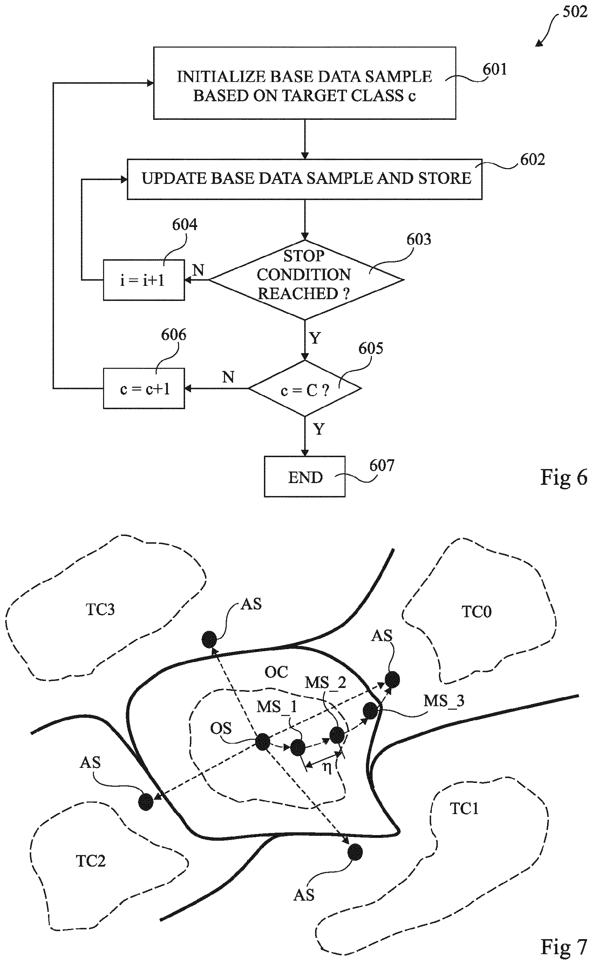

In a saving phase (SAVING), the computation device 301 is for example configured to transfer and store the state State_i of Net_1 to Net_2, as represented by an arrow (All tasks TRANSFER) from Net_1 to Net_2. In the case that Net_1 and Net_2 have the same depth and width as each other, the parameters and weights are for example simply copied from Net_1 to Net_2 in order to perform this transfer. Otherwise, other known techniques for knowledge transfer could be employed, such as the technique described in relation with Figures 6 to 11 of PCT application PCT/EP2021/074639, and in the PCT application no. PCT/EP2021/058631 filed on 2 April 2020, could also be employed.

Thus, after the saving phase, Net_2 is for example capable of yielding similar performance to Net_1 in terms of input classification. Net_2 is thus capable of generating old memories that were previously held by Net_1 during subsequent training of Net_1.

In a further phase (CONSOLIDATION), Net_1 is configured to learn one or more new tasks, as well as relearning the state State_i stored by Net_2, as represented by an arrow (Old tasks TRANSFER) from Net_2 to Net_1. By relearning, it is for example meant that the samples are replayed, such that previous learning is consolidated and preserved by the replaying. The one or more new tasks for example includes one or more new classes to be learnt by Net_1. The ANN Net_2, and the base data samples from the memory buffer 312, are for example used in order to generate pseudo-data samples that describe the stored state State_i of Net_2. For example, the pseudo-data samples are employed in order to capture or retrieve the mapping function, i.e. knowledge, of Net_2, for example using a distillation function. Indeed, the aim of the pseudo-data samples is that the state of Net_2 is preserved and memorized, allowing the pseudo-data samples to be used by Net_1 when learning a new task. Classic deep learning tools are for example used to allow the new tasks, and the generated pseudo-data samples, to be learnt by Net_1 during this phase, and to thus result in a new state State_i+1 of the ANN Net_1.

The training of Net_1 during the consolidation phase is for example performed based on a certain ratio between the new input data corresponding to one or more new tasks, and the pseudo-data samples representing the old tasks. For example, at least one pseudo-data sample is applied to Net_1 for each new task data sample that is applied, although the pseudo-data samples and new task data samples may be applied in groups. For example, there could be up to 1000 new task data samples, followed by up to 1000 or more pseudo-data samples, followed by up to 1000 new task data samples, etc.

The influence on the ANN Net_1 of the new task data samples is likely to be greater than the influence of the pseudo-data samples, and therefore, in some embodiments there may be a greater proportion of pseudo-data samples than new task data samples. For example, in some embodiments, the ratio R of new task data samples to pseudo-data samples is at least 1 to 10, and for example at least 1 to 20.

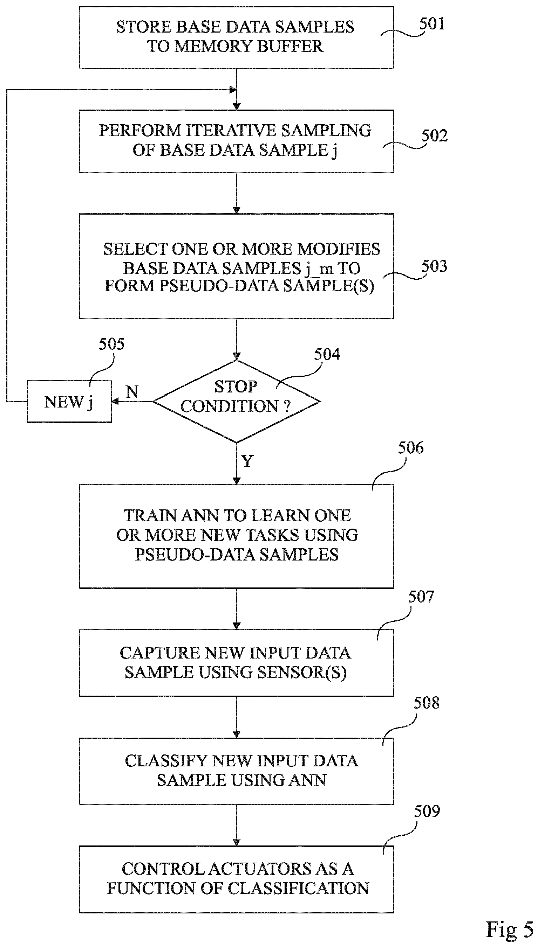

Figure 5 is a flow diagram illustrating operations in a control method 500 for continuous learning based on the two-phase approach of Figure 4, and for controlling the one or more actuators 322 of Figure 3. The control method 500 of Figure 5 is for example implemented by the computation device 301 of Figure 3.

In an operation 501 (STORE BASE DATA SAMPLES TO MEMORY BUFFER), base data samples are for example stored to the memory buffer 312, each base data sample including for example an input data sample, and a corresponding class or label associated with the input data sample. In some cases, a set of base data samples is stored to the data buffer 312 during an initialization phase of the computation device 301, and this set is for example maintained in the memory buffer 312 throughout the lifetime of the computation device 301 such that pseudo-data samples can be generated based on these tuples at any time. Alternatively, at least some of the base data samples correspond to, or are replaced by, newly acquired input data, and their corresponding class, acquired during operation of the computation device 301. In either case, the number of base data samples is for example significantly lower than the number of training data samples initially used to train Net_1. For example, for each class known by Net_1, there are tens, hundreds, or thousands, of base data samples stored in the memory buffer 312.

In an operation 502 (PERFORM ITERATIVE SAMPLING OF BASE DATA SAMPLE j), after the operation 501, an iterative sampling operation towards one or more of the decision boundaries is applied to a jth base data sample of the memory buffer 312, where j is an index used to select a sample in the memory buffer, j for example being in the range 1 to J, where J is the number of base data samples stored in the memory buffer. The value of j is for example randomly generated, or pseudo-randomly generated. In some embodiments, the iterative sampling operation is repeated, for the jth base data sample, at least once towards each class learnt by Net_2, other than the base class. The iterative sampling operation is for example performed using the ANN Net_2, so that the Net_1 may be trained at least partially in parallel with the iterative sampling method. In particular, the ANN Net_2 is for example configured to generate the pseudo-data samples, while the ANN Net_1 is configured to integrate the new tasks and consolidate the previous ones. In the case that Net_2 is used for the iterative sampling operation, the saving phase of Figure 4 is for example implemented prior to starting the iterative sampling, such that Net_2 has the same knowledge as Net_1.

An example of the iterative sampling operation is described in more detail below with reference to Figure 6. Each iteration for example results in the generation of a modified base data sample, the successively modified base data samples approaching a decision boundary between the origin class of the base data sample, and a selected target class c. In some embodiments, the target class c is selected randomly from the known classes other than the origin class of the base data sample. For example, the selection of the class c is performed uniformly from all previously known classes except the origin class, which will also be referred to as the base class. Thus, the probability distribution $p_i^c$ of the selected target classes is for example as follows:

[Math 5]

$$p_i^c = \begin{cases} 0 & if\ c = y_{base} \\ 0 & if\ c = y_{new\_task} \\ 1/(Old\_Classes - 1) & otherwise \end{cases}$$

where *Old_Classes* is the number of known classes previously learnt by the ANN, $y_{base}$ is the base class, and $y_{new\_task}$ is the class of any new class to be learnt.

In alternative embodiments, the operation 502 is repeated for each of the target classes among the known classes, other than the origin class.

In an operation 503 (SELECT ONE OR MORE MODIFIED BASE DATA SAMPLES j_m TO FORM PSEUDO-DATA SAMPLE(S)), after the operation 502, one or more of the modified base data samples, which will be referred to as tuples j_m, are for example selected to form pseudo-data samples. The selected modified base data samples are all for example within the origin class, in other words within the class of the base data sample j. Indeed, in some cases, one or more of the modified base data samples may be within the target class, such tuples corresponding to adversarial samples that are for example excluded from the selected modified base data samples.

In an operation 504 (STOP CONDITION), after the operation 503, it is for example determined whether a stop condition has been reached. For example, the pseudo-data sample generation is performed until a given number of pseudo-data samples have been generated and/or a given number of pseudo-data samples, such as at least one, have been generated towards each previously learnt class other than the base class. Alternatively, the pseudo-data sample generation is performed throughout the consolidation phase of Figure 4, and thus the stop condition is met once this consolidation phase is complete. In some embodiments, the pseudo-data samples are stored to the memory buffer 314 of Figure 3 prior to use. Alternatively, they may be used directly to consolidate old task, in which case the memory buffer 314 may be removed.

If the stop condition of operation 504 has not been met, a new value of j is for example generated in an operation 505 (NEW j), and the method then for example returns to operation 502, where iterative sampling is performed based on the new jth base data sample. Once the stop condition 504 has been met, an operation 506 is performed.

In the operation 506 (TRAIN ANN TO LEARN ONE OR MORE NEW TASKS USING PSEUDO-DATA SAMPLES), the ANN Net_1 is trained in order to learn one or more new tasks, while using the pseudo-data samples in order to consolidate the previous knowledge, where this previous knowledge corresponds for example to the class boundaries that are applied when performing the classification function. For example, during this new learning and consolidation phase, the ANN Net_1 is configured to minimize two loss functions at the same time, one loss based on the classification function, and another loss based on a distillation function using the pseudo-data. An example method applied during the consolidation phase will now be described in more detail.

It is assumed that, during the operation 506, Net_1 receives a stream of data couples $(x_i, y_i)$ that consists of data examples $x_i$ and corresponding classes $y_i$. Each example-class tuple $(x_i, y_i) \in X \times Y$ is for example an i.i.d. (independent and identically distributed) random example drawn from an unknown distribution P(X,Y), where $y$ represents the category of an example. Let us generalize this notation to continual learning. We can define $t \in \mathbb{N}^+$, and refer

to *t* as a task. We note ( $x_i^t, y_i^t$ ) an example-class tuple for task t. We will call herein "task" the process of categorizing a set of examples $x_i^t$ into their corresponding classes $y_i^t$ . Thus, a task may involve learning more than one class.

The final objective in continual learning is that the performance on previously learned tasks ( $x_i^{1,t}, y_i^{1,t}$ ) is not degraded significantly over time as a new task ( $x_i^{t+1}, y_i^{t+1}$ ) is learnt. Under this continual learning setup, the neural network classifier Net_1 can be defined as $f_\theta(X,Y) = (\omega \circ \phi):X \to Y$ parameterized by $\theta \in \mathbb{R}^P$ , where $P \in \mathbb{N}^+$ that consists of a feature extractor $\phi:X \to H$ and a classifier $\omega:H \to Y$, where *H* is an h-dimensional vector that represents the extracted features of the feature extractor $\phi:X \to H$.

The final objective of the model $f_\theta(X, Y)$ is to minimize the multitasking error on all learned tasks, as defined by the following equation (1):

[Math 6]

$$\frac{1}{T}\sum_{t=0}^{T} \mathbb{E}_{(x^t,y^t)\sim P}[\ell(f_\theta(x^t,y^t))]$$

where $\ell: Y \times Y \to \mathbb{R}$ , T is the number of learned tasks, $\mathbb{E}_{(x^t,y^t)\sim P}$ is the mathematical Esperance, and x,y are samples and labels drawn from distribution p.

To achieve this objective, the memory buffer 314 of Figure 3 is provided, represented as K in the following, and storing the pseudo-data samples that are used to revisit previous knowledge. We consider a fixed greedy memory buffer, meaning that there is a same number of samples from each class, and the buffer contains k pseudo-samples per class for each performed task, where $k \in \mathbb{N}^+$ . That is, there is for example always an equal number of examples per class available in the memory buffer 314. However, any type of memory buffer can be used.

In some embodiments, a distillation loss is used to alleviate forgetting in the incremental learning workflow.

Knowledge distillation and continual learning has been described in the literature, including, by way of non-exhaustive and non-limiting examples, by Hinton et al., in 2015 ("Distilling the knowledge in a neural network", NIPS Deep Learning and Representation Learning Workshop), by Heo et al. in 2019 ("Knowledge distillation with adversarial samples supporting decision boundary", in Proceedings of the AAAI Conference on Artificial Intelligence, volume 33, pages 3771-3778), by Yin et al. in 2020 ("Dreaming to distill: Data-free knowledge transfer via deepinversion", in Proceedings of the IEEE/CVF Conference on Computer Vision and Pattern Recognition, pages 8715-8724) and by Liu et al. in 2020 ("Mnemonics training: Multi-class incremental learning without forgetting", in Proceedings of the IEEE/CVF Conference on Computer Vision and Pattern Recognition, pages 12245-12254). A knowledge distillation loss is for example employed herein to alleviate catastrophic forgetting. The distillation loss encourages the ANN Net_1 to maintain the performance on previous learned tasks and ensures that previously learned knowledge is not completely lost.

For some sample $x \in X$, let us assume the logits with $z = f_\theta(x)$ and the corresponding probability distribution over the classes $q_\theta(x)$, defined by definition as $q_\theta(x) \triangleq \sigma(f_\theta(x))$ , where $\sigma(.)$ refers to the softmax function. Given an input set of samples *x*, suppose that $\hat{y} = f_{Net\_1}(x)$ is the output logits of the Net_1 classifier and $y^*=f_{Net\_2}(x)$ is the output logits of the Net_2 classifier. Then, the knowledge distillation loss is defined by the following equation (2):

[Math 7]

$$\mathcal{L}_{KD}(y^*, \hat{y}) = J\langle z^{Net\_2}, z^{Net\_1}\rangle = J\left(\sigma\left(\frac{f_{net\_2}(x)}{S}\right), \sigma\left(\frac{f_{net\_1}(x)}{S}\right)\right)$$

where $J$ is the Jensen-Shannon divergence between Net_1 and Net_2 that defines the entropy function as $J(a,b) = -a^T \log b$, where $a$ and $b$ are column vectors and log is the element-wise logarithm (see for example Heo et al., 2019; and Yin et al., 2020, mentioned above). $S \in \mathbb{N}^+$ is the so-called temperature coefficient, which for standard softmax is set to 1. The temperature generates a smoother output distribution of the soft-targets, that for example prevents the loss from becoming too large (see Hinton et al., 2015, mentioned above).

For an incremental training step, the approach described herein employs a set of base sample pairs from the new task $\{(x_i^{t+1}, y_i^{t+1}) | i = 1, \ldots, N\}$ and the set of crafted pseudo-data samples from the previous tasks denoted by $\{(\dot{x}_i^c) | i = 1, \ldots, N; c = 1, \ldots, C\}$, where $\dot{x}_i^c$ are the pseudo-data samples generated based on base data samples randomly sampled from the memory buffer 312 and modified to move towards a particular class boundary with a target class c. To perform continual learning without catastrophic forgetting, Net_1 for example minimizes two loss functions:

- $\mathcal{L}^{t+1}$ : the new task categorical cross-entropy loss between prediction and the new class labels for some $x_i \in X^{t+1}$, which is denoted by a one-hot vector $y_i \in Y^{t+1}$, in other words a value of "1" for the ground truth class and a value of "0" for the other classes;

- $\mathcal{L}_{KD}^{t+1}$ : the knowledge distillation loss of equation 2 on the crafted pseudo-data samples.

- The total loss is defined in the following equation (3):

[Math 8]

$$\mathcal{L}_{total} = \mathcal{L}^{t+1}(x) + \beta \mathcal{L}_{KD}^{0,t}(\dot{x}^c)$$

where $\mathcal{L}^{t+1}(x)$ is the categorical cross-entropy loss for new task and $\beta$ is a coefficient that weights the importance of the knowledge distillation loss.

Referring again to Figure 5, once the ANN Net_1 has been trained to learn new tasks in the operation 506, it can be used to perform inference based on new input data, that can include new input data samples falling within the newly learned class or classes. This process is represented by operations 507 to 509 in Figure 5.

In the operation 507 (CAPTURE NEW INPUT DATA SAMPLE USING SENSOR(S)), a new input data sample is for example captured using the sensors 320 of Figure 3.

In the operation 508 (CLASSIFY NEW INPUT DATA SAMPLE USING ANN), the ANN Net_1 is for example used to perform inference, and in particular to infer the class associated with the input data sample.

In the operation 509 (CONTROL ACTUATORS AS A FUNCTION OF CLASSIFICATION), the one or more actuators 322 of Figure 3 are for example controlled as a function of the determined classification.

Figure 6 is a flow diagram illustrating the iterative sampling operation 502 of the method of Figure 5 in more detail according to an example embodiment of the present disclosure.

Reference will also be made to Figure 7, which illustrates a 2-dimensional space providing an example of a model that classifies elements into one of five classes, and an example of a trajectory of a sample in this space.

Figure 7 illustrates in particular an example of an original sample OS in an origin class OC, and four further classes TC0, TC1, TC2 and TC3, which are target classes towards which the original sample OS can be iteratively moved. The classes OC, TC0, TC1, TC2 and TC3 are separated by class boundaries represented by continuous-line curves in Figure 7. A dashed-line contour in each class in Figure 7 represents the limits of the sample distributions in each class. Therefore, while class boundaries are learnt that provide a relatively sharp cut-off between one class and its neighbors, in practice, the real samples rarely fall outside the dashed-line contours. Figure 7 also illustrates an example of the trajectory of the original sample OS towards the target class TC0 is illustrated in Figure 7, comprising modified base data samples MS_1, MS_2, MS_3 and AS. The modified tuple AS is in fact an adversarial sample, as it is over the class boundary from the origin class, and thus in the target class TC0.

Referring again to Figure 6, in an operation 601 (INITIALIZE BASE DATA SAMPLE BASED ON TARGET CLASS c), a selected base data sample from the memory buffer 312 is for example initialized to $x^c\_0 = x$, where c is the target class, and "0" means iteration zero. The selected base data sample can be moved towards any previously learnt class c of Net_2, expect the class of the tuple. In some embodiments, the target class c is randomly and uniformly selected once for each base data sample. Alternatively, as illustrated in the example of Figure 6, c is a variable that is initialized at 0, and incremented until iterative sampling has been performed towards each of the target classes.

In an operation 602 (UPDATE BASE DATA SAMPLE AND STORE), the tuple $\{x_i^c | i = 1, ..., N\}$ is iteratively updated to approximate to the target class c. The updated sample is denoted by xf, where i is the ith iteration and c is the target class.

An algorithm is for example used to update the base data sample using the ANN Net_2, as will now be explained in more detail. The ANN Net_2 outputs a prediction for all previously learned classes, and the class of a sample is determined by the maximum output activation, in other words the neuron with the highest activation value at the output of the classifier. We will call **Net_2b** the classification output for the base sample and **Net_2c** the classification output for the target class c. Each of the classification outputs is for example a one-hot vector of binary values representing the classes, one of the values having a first state, for example a "1", indicating that this class corresponds to the output class, the other values having a second state, for example a "0". As an example, in the case of three classes, the output vector may be (0,0,1), where the classification is the third class. Rather than the binary values, each value of the vector would alternatively be a Logit, corresponding to the raw values of the predictions or outputs of the model, e.g. prior to normalization. In particular, as known by those skilled in the art, Logits are generated by the last pre-activation layer in a deep ANN classifier, this layer often being referred to as the Logits layer, as known by those skilled in the art. The classification output is fixed for a given target class, whereas the classification output of the base sample changes as the base sample is modified. To approximate a sample from one class to another class, the output activation of the base class should be decreased while increasing the output activation of the target class. This can be done by modifying the base sample regarding the loss function between base class and target class in accordance with the following equation (4):

[Math 9]

$$\mathcal{L}_c(x) = Net\_2b(x) - Net\_2c(x)$$

In the case that the classification outputs *Net_2b(x)* and *Net_2c(x)* are in the form of one-hot vectors as described above, the result of this loss function is for example a one-hot vector. In the case that the classification outputs *Net_2b(x)* and *Net_2c(x)* are in the form of Logit values, the result of this loss function is for example a vector of real values, each value having a range that depends on the activation function of the output layer. For example, the range is between 0 and 1 in the case of "RELU" output function, or between -1 and 1 in the case of a tanh activation function.

This loss function allows samples at the decision boundaries to be detected when $\mathcal{L}_c(x) \simeq 0$ and adversarial examples to be detected when $\mathcal{L}_c(x) < 0$, in other words when *x* crosses the limits from the base class to the target class. In order to craft an adversarial sample, several steps towards a target class are for example performed until the class boundary is crossed. These steps constitute a chain of samples, so it is called iterative sampling towards the decision boundaries, which is defined as follows (equation 5) :

[Math 10]

$$\dot{x}_{i+1}^c = x_i^c - \eta(\mathcal{L}_c(x_i^c) + \varepsilon) \frac{\nabla \mathcal{L}_c(x_i^c)}{\|\mathcal{L}_c(x_i^c)\|_2}$$

where $\nabla \mathcal{L}_c(x_i^c)$ is the gradient of the loss function $\mathcal{L}_c(x_i^c)$, $\varepsilon$ is a perturbation, and $\eta$ is a modification rate from one iteration to the next. A typical value of the modification rate $\eta$ is in the range 0.0001 to 0.01, and for example in the range 0.0005 to 0.005. A typical value of the perturbation $\varepsilon$ is in the range 0.01 to 0.1.

The operation 602 for example involves calculating the loss function $\mathcal{L}_c(x_i^c)$ and the gradient $\nabla \mathcal{L}_c(x_i^c)$

of the loss function $\mathcal{L}_c(x_i^c)$ using the ANN Net_2, and updating the base data sample $x_i^c$ based on the equation 5 above. To generate a pseudo-data sample the error is for example backpropagated into the input layer (image space). The error can be computed though different losses and ways as any adversarial attack. However, the amount of change is for example controlled so that the change is relatively small in order to approximate the samples close to the decision class boundaries. In the example of Figure 7, a first updating of the original sample OS results in a modified sample MS_1 that is a step closer to the target class TC0.

With reference again to Figure 6, in an operation 603 (STOP CONDITION REACHED?), after the operation 602, it is for example determined whether a stop condition has been reached. There are several possibilities for implementing the stop condition.

According to one example, the samples are updated over a limited number N of iterations, where N is for example a fixed value. For a given environment, the values of the perturbation $\varepsilon$, the modification rate $\eta$, and the number N of iterations, are for example chosen such that the Nth iteration results in a sample that is at a limited distance from a center of the origin class. In some embodiments, this limited distance keeps the sample within the origin class, in other words the Nth iteration has not crossed the decision boundary. Furthermore, in some embodiments, this limited distance is within the sample distribution zone of the origin class, which is represented by the dashed contour in the origin class OC of Figure 7. Indeed, in practice, there is generally a relatively high distance between the edge of this sample distribution zone, which can be estimated based on an analysis of the data set, and the class boundaries. In some embodiments, the value of N is determined during a calibration phase for a given ANN. For example, this involves applying an initial step size, and repeating iterations until it is detected based on the classification output that, after N' iterations, a decision boundary has been crossed. The number of iterations N is then for example generated by reducing N by between 5 and 60 percent. Alternatively, N' is selected as the value of N, but the step size is for example decreased by adjusting the modification rate $\eta$, for example by between 5 and 60 percent.

According to another example, the stop condition, and thus the number of iterations N, is based on a detection on each iteration of when the sample crosses the class boundary, which can for example be determined using the logits resulting from a prediction of each sample using the ANN Net_2. For example, the following two stop conditions can be detected:

- stop condition 1: $i + 1 \geq I_{max}$

- stop condition 2: $(\mathcal{L}_c(x_{i+1}^c) < 0)$ and

$$((\mathcal{L}_c(x_i^c) > 0)$$

where $I_{max}$ is an estimation of the maximum number of steps that a sample can perform before reaching the decision class boundary, this value for example being determined during a calibration phase as described above.

According to yet a further example, the stop condition is based on a prediction generated for the modified sample $x_{i+1}^c$ using Net_2, and for example based on the activation value, or logit value, of the origin class and/or of the target class. As an example, a difference value $\triangle$ **Net_2bt** between the logit value of the base class and of the target class is initially determined for the original sample, and a new difference value $\triangle$ **Net_2bt'** is calculated in operation 603 for the modified sample $x_{i+1}^c$. The stop condition is for example met when the new difference value $\triangle$ **Net_2bt'** has fallen to less than a certain percentage of the original difference value $\triangle$ **Net_2bt,** for example less than 50 percent of the original difference value $\triangle$ **Net_2bt.**

Of course, two or more of the above stop conditions could be applied in parallel, the overall stop condition being considered as reached if either of the stop conditions is met. For example, it would be possible to apply a stop condition based on a detection of the boundary in addition to a stop condition based on a fixed number of iterations, the iterations stopping as soon as one or the other of these conditions is met.

If the stop condition of operation 603 has not been reached in operation 603 (branch N), the variable i is for example incremented in an operation 604 (i=i+1), and then the operation 602 is for example repeated, such that the sample updating is performed again in order to take another step towards the decision boundary.

Once the stop condition of operation 603 has been met (branch Y), a next operation 605 is for example performed.

In operation 605, it is for example determined whether iterative sampling has been performed towards all C target classes, in other words whether the variable c is equal to C. If not (branch N), the variable c is for example incremented in an operation 606 (c=c+1), and then the method returns to the operation 601. Of course, rather than performing iterative sampling of each base data sample towards each class boundary, it would be possible to perform iterative sampling of all base data samples of a given learning batch towards a first class boundary, and then to perform iterative sampling of all base data samples of another learning batch towards a second class boundary, etc. Once the stop condition of operation 605 has been met (branch Y), the iterative sampling operation for example ends in an operation 607 (END), and the method of Figure 5 continues with the selection operation 503.

The selection operation 503 of Figure 5 depends for example on the manner in which the iterative sampling has been performed. For example, in some embodiments, each iterative sampling operation iteratively updates the origin sample until a class boundary has been crossed. In this case, only some of the modified samples are for example selected to form the pseudo-data samples, at least any adversarial examples being excluded. Alternatively, the number N of iterations has been fixed, or the stop condition is based on a threshold logit value of origin or target class, and all of the generated modified samples are for example selected to form the pseudo-data samples.

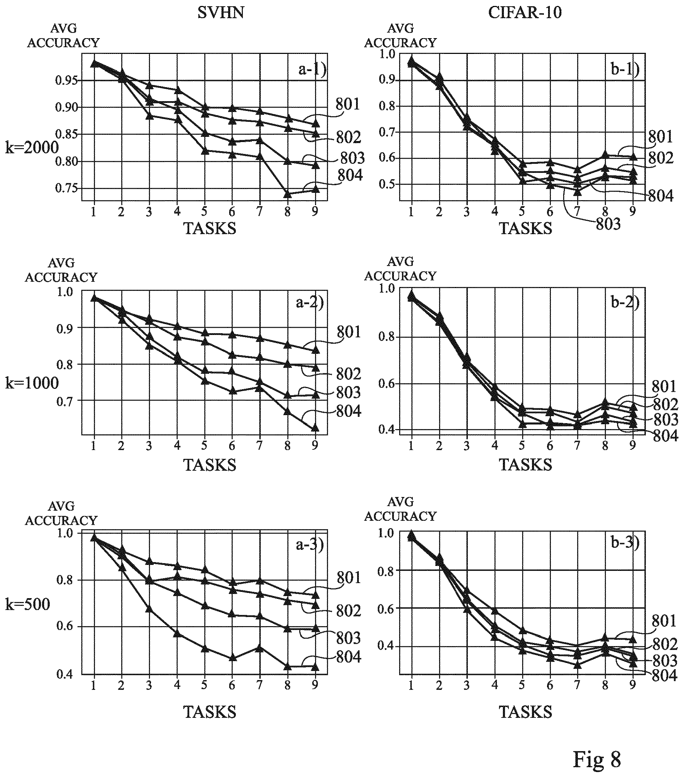

Figure 8 shows six graphs presenting accuracy results obtained using the method and device described herein. Each of the graphs has four curves 801, 802, 803 and 804 that plot the average accuracy obtained as a function of the number of tasks learnt by the ANN. These curves correspond to the following cases:

The curve 802 in each graph corresponds to an example referred to herein as H3 in which the two neural networks Net_1, Net_2 as described herein are used, and consolidation is performed using a distillation loss with the pseudo-data samples generated by iterative sampling, but with only the final sample before the decision boundary being selected as a pseudo-data sample.

The curve 801 in each graph corresponds to an example referred to herein as H3++ in which the two neural networks Net_1, Net_2 as described herein are used, and the pseudo-data samples are collected as all of the examples of the trajectory performed in the iterative process of Figure 6. That is, rather than using only the last modified base data sample before the decision class boundaries, all consecutive data samples from the base data sample to the boundary data sample are used, including the base data sample itself.

The curve 803 in each graph is generated based on a solution that will be called here *KD Simple,* and is also known as icarl - see the 2017 publication Rebuffi et al. entitled "icarl: Incremental classifier and representation learning", in Proceedings of the IEEE conference on Computer Vision and Pattern Recognition, pages 2001-2010. This is a distillation-based method that stores a pre-updated version of a classifier to capture previous knowledge using a memory buffer. This solution simply consists of replaying the old samples with a distillation loss when learning the samples of the new task.

The curve 804 in each graph is generated based on a solution that will be called here *Raw Replay,* and is also known as Episodic Replay (ER), described by Chaudhry et al. in the 2019 publication entitled "Continual learning with tiny episodic memories". The solution is based on a classifier that uses a memory buffer as a constraint to avoid catastrophic forgetting. Raw replay consists of replaying the old samples and their corresponding labels when learning the samples of the new task.

To generate the curves 801 to 804 of the graphs of Figure 8, two commonly used datasets were used that differ in complexity: the SVHN dataset; and the more complex CIFAR-10 dataset. The images are scaled between 0 and 1 using min-max normalization.

The SVHN and CIFAR-10 benchmark tests consist of a total of 9 tasks, of which the first contains two classes and the rest one. The performance of all the experiments were measured with a single-head evaluation metric. The performance of the baseline classifiers was evaluated using a VGGNets ANN, as described by Simonyan and Zisserman (2014) in the publication "Very deep convolutional networks for large-scale image recognition", arXiv preprint arXiv:1409.1556, with 13 layers. The models were trained using the Adam optimizer with beta1=0.9 and beta2=0.99, and the learning rates of 0.001. All experiments were performed with the following hyperparameters: $\eta$ = 0.001, a maximum number N of iteration steps of 20, a batch size of 32, including old and new tasks, and $\beta$ = 150.

The graphs a-1) and b-1) were respectively generated using the SVHN and CIFAR-10 datasets, and with a buffer size bounded at 2000 examples, the graphs a-2) and b-2) were respectively generated using the SVHN and CIFAR-10 datasets, and with a buffer size bounded at 1000 examples, and graphs a-3) and b-3) were respectively generated using the SVHN and CIFAR-10 datasets, and with a buffer size bounded at 500 examples. The accuracy was averaged over 3 runs on test sets during the learning steps.

It can be seen from the graphs of Figure 8 that the solutions of the present application, represented by the curves 801 and 802, performed consistently better in terms of average accuracy than the alternative solutions.

The accuracy of the solution of the present application is also demonstrated by Tables 1, 2, 3 and 4 below. Table 1 and Table 2 summarize the final accuracy (i.e. after learning the nine tasks) when different sample sources and a memory buffer of size 2000 are employed. Tables 3 and 4 summarize the results of the comparison with state of the art approaches when employing 500, 1000 and 2000 memory buffer sizes.

In Table 1 below, the accuracy was determined based on the SVHN dataset, and for the solutions: *Raw replay* described above; *Raw replay* combined with the H3 solution described above; the solution H3; a solution H4 corresponding to sample falling on the decision boundaries; and the solution *KD simple* described above. It can be seen that the solution H3 outperformed the other solutions, whether or not combined with the *Raw replay* solution.

[Table 1]

| Replay | Raw replay | Raw replay + H3 | H3 | H4 | H5 *(KD simple)* |
|---|---|---|---|---|---|
| Accuracy | 0.75 | 0.87 | 0.86 | 0.24 | 0.79 |

Table 2 below is similar to Table 1, but shows a final average accuracy after learning the 9 tasks in the CIFAR-10 dataset. Again, it can be seen that the solution H3 outperformed the other solutions.

[Table 2]

| Replay | Raw replay | Raw replay + H3 | H3 | H4 | H5 *(KD simple)* |
|---|---|---|---|---|---|
| Accuracy | 0.50 | 0.57 | 0.55 | 0.21 | 0.51 |

Table 3 below illustrates the amount of forgetting for different memory buffer sizes of 500, 1000 and 2000 in SVHN dataset, and for the solutions H3++ (KD_border_all), H3 (KD_border), *KD simple* (KD_simple) and *Raw replay* (Raw_replay). It can be seen that the solutions H3 and H3++ had the best performance.

[Table 3]

| Forgetting (SVHN) | | | |
|---|---|---|---|
| Method/Buffer | 500 | 1000 | 2000 |
| KD_border_all | 0.22 | 0.12 | 0.08 |
| KD_border | 0.27 | 0.16 | 0.09 |
| KD_simple | 0.39 | 0.24 | 0.15 |
| Raw_replay | 0.6 | 0.33 | 0.23 |

Table 4 below is similar to Table 3, but illustrates results corresponding to the CIFAR-10 dataset. Again, it can be seen that the solutions H3 and H3++ had the best performance.

[Table 4]

| Forgetting (CIFAR-10) | | | |
|---|---|---|---|
| Method/Buffer | 500 | 1000 | 2000 |
| KD_border_all | 0.53 | 0.48 | 0.31 |
| KD_border | 0.6 | 0.46 | 0.34 |
| KD_simple | 0.66 | 0.53 | 0.40 |
| Raw_replay | 0.72 | 0.57 | 0.45 |

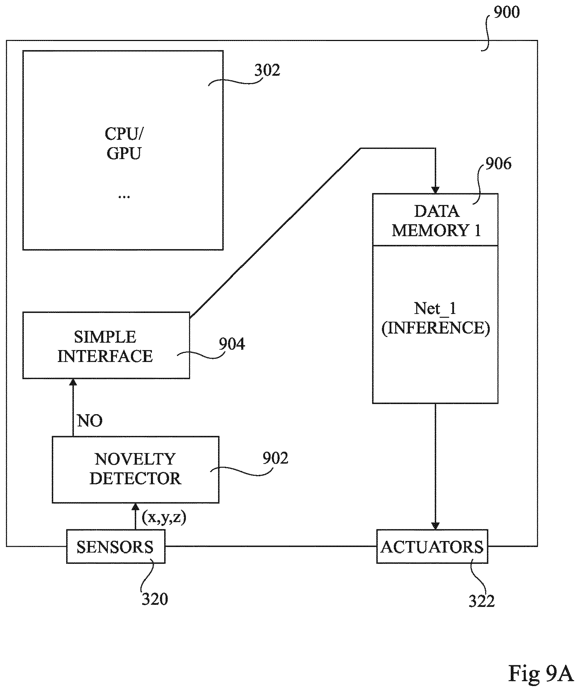

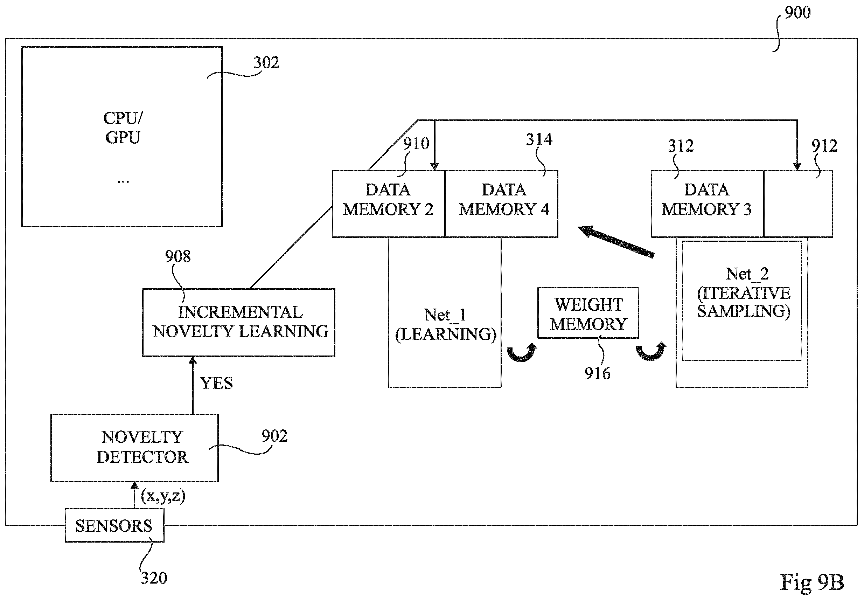

Figures 9A and 9B illustrate a hardware control device 900 according to an example embodiment of the present disclosure. Figure 9A represents modules for processing input data falling within a previously learnt dataset, and Figure 9B represents modules for processing new input data.

Certain features of the hardware control device 900 are the same as features of the control system 300 of Figure 3, and these elements have been labelled with like reference numerals and will be described again in detail. While not labelled as such, the processing device and memories of the device 900 for example implement the computation device 301 of Figure 3.

In the hardware control device 900, input data samples, which may include values x, y and z, captured by the sensors (SENSORS) 302, are provided to a novelty detector (NOVELTY DETECTOR) 902. The novelty detector 902 is for example implemented in hardware and/or by software executed by a processing device, such as the processing device 302 (CPU/GPU). The novelty detector 902 is for example configured to detect when an input data sample is sufficiently distant from past data samples that it should be considered to correspond to a new class to be learnt by the ANN. Examples of novelty detectors have been proposed in the prior art, and are well known to those skilled in the art. For example, a novelty detector can be based on a calculation of a Euclidean distance. Novelty detectors are described in more detail in the publication by Marco A.F. Pimentel et al. entitled "A review of novelty detection", Signal Processing 99 (2014) 215-249.

Figure 9A illustrates a case in which the input data samples are not found to be new data samples (output NO from the novelty detector 902). They are thus provided, via an interface 904 (SIMPLE INTERFACE), to a memory buffer 906 (DATA MEMORY 1), where they are stored temporarily prior to being processed by the ANN Net_1 according to an inference operation (INFERENCE). The result of this inference is for example used to control the one or more actuators 322.

Figure 9B illustrates a case in which the input data samples are found to be new data samples (output YES from the novelty detector 902). They are thus provided, via an incremental novelty learning interface 908 (INCREMENTAL NOVELTY LEARNING) to a memory buffer 910 (DATA MEMORY 2), coupled to the ANN Net_1. Certain samples, for example selected randomly, are also for example provided to a memory buffer 912, where they are temporarily stored before being moved to the main memory buffer 312 once the new tasks have been learnt. In some embodiments, the class of new data samples is indicated manually by a user of the hardware control device 900.

A saving operation is then for example performed from the ANN Net_1 to the ANN Net_2, this saving for example being performed by transferring the weights of the ANN Net_1 to a weight memory (WEIGHT MEMORY) 916 of the ANN Net_2. This corresponds to the saving phase of Figure 4.

The ANN Net_2 is then for example used to generate pseudo-data samples based on base data samples from the memory buffer 312 (DATA MEMORY 3 in Figure 9B), using iterative sampling (ITERATIVE SAMPLING) as described herein. The generated pseudo-data samples are stored to the memory buffer 314 (DATA MEMORY 4 in Figure 9B), and the ANN Net_1 is then configured to perform a consolidated learning operation (LEARNING) based on the new data samples from the memory buffer 910, and the pseudo-data samples from the memory buffer 314.

An advantage of the embodiments described herein is that a control system and method based on artificial intelligence can have improved accuracy, and reduced forgetting, based on the use of iterative sampling to generate pseudo-samples. The control system is thus able to provide improved control of actuators, leading to technical advantages over prior control systems.

Various embodiments and variants have been described. Those skilled in the art will understand that certain features of these embodiments can be combined and other variants will readily occur to those skilled in the art. For example, while embodiments have been described in which two ANNs Net_1 and Net_2 are used, in alternative embodiments it would be possible to use only the ANN Net_1, if for example all of the pseudo-data samples are generated in advance, using Net_1, prior to the consolidation phase involving the learning of the new task.

Furthermore, while examples have been described based on multi-layer perceptron ANN architectures, the description of the method proposed to resolve catastrophic forgetting applies more generally to any deep learning neural network (DNN) and convolutional neural networks (CNN). Furthermore, the principles described herein could also be applied to other families of neural networks including, but not restricted to, recurrent neural networks, reinforcement learning networks, etc. The described embodiments also apply to hardware neural architectures, such as Neural Processing Units, Tensor Processing Units, Memristors, etc.

**Claims**

1. A control system comprising:

   - a computation device (301) implementing at least a first artificial neural network (Net_1), the first artificial neural network (Net_1) having a first state (State_i) after having been trained to classify input data samples into a plurality of known classes separated by one or more decision boundaries, the computation device (301) comprising a memory buffer (312) storing one or more base data samples, each base data sample comprising an input data sample and a corresponding class among the plurality of known classes;
   - one or more sensors (320) configured to capture input data samples; and
   - one or more actuators (322);

   wherein the computation device (301) is configured to:

   generate at least one pseudo-data sample;
   train the first artificial neural network to learn one or more new classes in addition to the plurality of known classes using the at least one pseudo-data sample;

classify a new input data sample using the first artificial neural network; and
control the one or more actuators (322) as a function of the classification of the new input data sample,
wherein the computation device (301) is configured to generate each of the at least one pseudo-data sample by:

   a) iterative sampling one of the base data samples towards one of the decision boundaries to generate one or more modified base data samples; and
   b) selecting one or more of the modified base data samples to form the pseudo-data sample.

2. The control system of claim 1, wherein the computation device (301) further implements a second artificial neural network (Net_2), the second artificial neural network (Net_2) also having been trained to classify the input data samples into the plurality of known classes separated by one or more decision boundaries, or having been programmed to memorize the first state (State_i) of the first artificial neural network.

3. The control system of claim 2, wherein the computation device is further configured, prior to generating the at least one pseudo-data sample, to at least partially transfer knowledge held by the first artificial neural network (Net_1) to the second artificial neural network (Net_2), wherein the at least one pseudo-data sample is generated using the second artificial neural network (Net_2), and wherein the training of the first artificial neural network (Net_1) is performed at least partially in parallel with the generation of one or more pseudo-data samples by the second artificial neural network (Net_2).

4. The control system of any of claims 1 to 3, wherein the one or more sensors (320) comprise an image sensor, the input data samples being one or more images captured by the image sensor, and the computation device being configured to perform said classification of the new input data sample by image processing of the new input data sample using the first artificial neural network (Net_1).

5. The control system of any of claims 1 to 4, wherein the computation device (301) is configured to repeat the operations a) and b) for each class (c) previously learnt by the first artificial neural network, except the class of the base data sample.

6. The control system of any of claims 1 to 5, wherein the computation device (301) is configured to generate each of the one or more modified base data samples ( $\dot{x}^c_{i+1}$ ) of the iteration i+1 based on the following equation:

[Math 11]

$$\dot{x}^c_{i+1} = x^c_i - \eta(\mathcal{L}_c(x^c_i) + \varepsilon) \frac{\nabla \mathcal{L}_c(x^c_i)}{\|\mathcal{L}_c(x^c_i)\|_2}$$

where $x^c_i$ is the base data sample of the iteration i towards a target class c, $\mathcal{L}_c(x^c_i)$ is a loss function of $x^c_i$, $\nabla\mathcal{L}_c(x^c_i)$ is the gradient of the loss function $\mathcal{L}_c(x^c_i)$, $\varepsilon$ is a perturbation, and $\eta$ is a modification rate from one iteration to the next, wherein the loss function of $x^c_i$ is for example determined based on the following equation:

[Math 12]

$$\mathcal{L}_c(x) = Net\_2b(x) - Net\_2c(x)$$

where *Net_2b(x)* is the classification output of the base data sample, and **Net_2c(x)** is the classification output of the target class c.

7. The control system of any of claims 1 to 6, wherein the computation device (301) is further configured to:
detect, using a novelty detector, whether one or more new input data samples (NEW TASK) correspond to a class that is not already known to the first artificial neural network (Net_1).

8. The control system of any of claims 1 to 7, wherein the computation device is configured to perform the iterative sampling over a plurality of iterations until an iteration I at which a stop condition is met, the stop condition being one of the following, or a combination thereof:

1) iteration I corresponds to a maximum number N of iterations, where N is for example between 4 and 30;
2) a class boundary between the base class of the base data sample and the target class has been reached and/or crossed by the modified base data sample of the iteration I;
3) the activation value at the output of the first artificial neural network (Net_1) resulting from the modified base data sample of iteration i has exceeded a threshold.

9. A method of controlling one or more actuators (322), the method comprising:

- implementing at least a first artificial neural network (Net_1) using a computation device (301), the first artificial neural network (Net_1) having a first state (State_i) after having been trained to classify input data samples into a plurality of known classes separated by one or more decision boundaries, the computation device (301) comprising a memory buffer (312) storing one or more base data samples, each base data sample comprising an input data sample and a corresponding class among the plurality of known classes;
- generating at least one pseudo-data sample;
- training the first artificial neural network (Net_1) to learn one or more new classes in addition to the plurality of known classes using the at least one pseudo-data sample;
- capturing, using one or more sensors (320), a new input data sample;
- classifying the new input data sample using the first artificial neural network; and
- controlling the one or more actuators (322) as a function of the classification of the new input data sample, wherein generating each of the at least one pseudo-data sample comprises:

a) iteratively sampling one of the base data samples towards one of the decision boundaries to generate one or more modified base data samples; and
b) selecting one or more of the modified base data samples to form the pseudo-data sample.

10. The method of claim 9, further comprising implementing a second artificial neural network (Net_2) using the computation device (301), the second artificial neural network (Net_2) also having been trained to classify the input data samples into the plurality of known classes separated by one or more decision boundaries, or having been programmed to memorize the first state (State_i) of the first artificial neural network.

11. The method of claim 10, further comprising, prior to generating the at least one pseudo-data sample, at least partially transferring knowledge held by the first artificial neural network (Net_1) to the second artificial neural network (Net_2), wherein the at least one pseudo-data sample is generated using the second artificial neural network (Net_2), and wherein the training of the first artificial neural network (Net_1) is performed at least partially in parallel with the generation of one or more pseudo-data samples by the second artificial neural network (Net_2).

12. The method of claim 10 or 11, wherein the one or more sensors (320) comprise an image sensor, the input data samples being one or more images captured by the image sensor, and classifying the new input data sample comprises image processing of the new input data sample using the first artificial neural network (Net_1).

13. The method of any of claims 9 to 12, wherein generating each of the one or more modified base data samples ( $\dot{x}^c_{i+1}$ ) of the iteration i+1 is performed based on the following equation:

[Math 13]

$$\dot{x}^c_{i+1} = x^c_i - \eta(\mathcal{L}_c(x^c_i) + \varepsilon) \frac{\nabla \mathcal{L}_c(x^c_i)}{\left\|\mathcal{L}_c(x^c_i)\right\|_2}$$

where $x_i^c$ is the base data sample of the iteration i towards a target class c, $\mathcal{L}_c(x_i^c)$ is a loss function of $x_i^c$, $\nabla\mathcal{L}_c(x_i^c)$ is the gradient of the loss function $\mathcal{L}_c(x_i^c)$, $\varepsilon$ is a perturbation, and $\eta$ is a modification rate from one iteration to the next, wherein the loss function of $x_i^c$ is for example determined based on the following equation:

[Math 14]

$$\mathcal{L}_c(x) = Net\_2b(x) - Net\_2c(x)$$

where *Net_2b(x)* is the classification output of the base data sample, and **Net_2c(x)** is the classification output of the target class c.

14. The method of any of claims 9 to 13, further comprising:
detecting, using a novelty detector, whether one or more new input data samples (NEW TASK) correspond to a class that is not already known to the first artificial neural network (Net_1).

15. The method of any of claims 9 to 14, wherein the iterative sampling is performed over a plurality of iterations until an iteration I at which a stop condition is met, the stop condition being one of the following, or a combination thereof:

1) iteration I corresponds to a maximum number N of iterations, where N is for example between 4 and 30;
2) a class boundary between the base class of the base data sample and the target class has been reached and/or crossed by the modified base data sample of the iteration I;
3) the activation value at the output of the first or second artificial neural network (Net_1, Net_2) resulting from the modified base data sample of iteration i has exceeded a threshold.

16. The method of claim 15, wherein the stop condition is that the iteration I corresponds to a maximum number N of iterations, the method further comprising a calibration phase before the iteratively sampling, the calibration phase determining a value of N based on a number of iterations (N') taken to reach a class boundary.

Fig 1

Fig 2

300

301

320

SENSORS

318

INSTR
MEM
304

302

316

I/O
INTERFACE

P

Net_1
Net_2

322

ACTUATORS

MEMORY
306

Net_1
308

Net_1
310

DATA/CLASS
EXAMPLES
312

PSEUDO -
DATA
314

Fig 3

SAVING

State_i

Net_1

All tasks

TRANSFER

State_i

Net_2

①

CONSOLIDATION

State_i+1

New task

Net_1

Old tasks

TRANSFER

State_i

Net_2

②

Fig 4

STORE BASE DATA SAMPLES
TO MEMORY BUFFER — 501

PERFORM ITERATIVE SAMPLING
OF BASE DATA SAMPLE j — 502

SELECT ONE OR MORE MODIFIES
BASE DATA SAMPLES j_m TO
FORM PSEUDO-DATA SAMPLE(S) — 503

505 — NEW j ← N — STOP CONDITION ? — 504

Y

TRAIN ANN TO LEARN ONE
OR MORE NEW TASKS USING
PSEUDO-DATA SAMPLES — 506

CAPTURE NEW INPUT DATA
SAMPLE USING SENSOR(S) — 507

CLASSIFY NEW INPUT DATA
SAMPLE USING ANN — 508

CONTROL ACTUATORS AS A
FUNCTION OF CLASSIFICATION — 509

Fig 5

502

Fig 6

Fig 7

SVHN

CIFAR-10

AVG
ACCURACY

a-1)

801
802
803
804

k=2000

TASKS

AVG
ACCURACY

b-1)

801
802

804

803

TASKS

AVG
ACCURACY

a-2)

801

802
803
804

k=1000

TASKS

AVG
ACCURACY

b-2)

801
802
803
804

TASKS

AVG
ACCURACY

a-3)

801

802

803
804

k=500

TASKS

AVG
ACCURACY

b-3)

801

802
803
804

TASKS

Fig 8

900

302

CPU/
GPU

...

906

DATA
MEMORY 1

Net_1
(INFERENCE)

SIMPLE
INTERFACE

904

NO

NOVELTY
DETECTOR

902

(x,y,z)

SENSORS

320

ACTUATORS

322

Fig 9A

Fig 9B

Europäisches
Patentamt

European
Patent Office

Office européen
des brevets

## EUROPEAN SEARCH REPORT

**Application Number**

EP 22 21 2043

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2021/198426 A1 (COMMISSARIAT ENERGIE ATOMIQUE [FR]; UNIV GRENOBLE ALPES [FR] ET AL.) 7 October 2021 (2021-10-07)<br>* paragraph [0009] – paragraph [0020] *<br>* paragraph [0094] – paragraph [0119] *<br>* paragraph [0126] – paragraph [0136] *<br>----- | 1-16 | INV.<br>G05B13/02 |

**TECHNICAL FIELDS SEARCHED (IPC)**

G05B
G06N

The present search report has been drawn up for all claims

| Place of search | Date of completion of the search | Examiner |
|---|---|---|
| The Hague | 31 January 2023 | Kelperis, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 2043

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2023

| Patent document cited in search report | | Publication date | Patent family member(s) | | Publication date |
|---|---|---|---|---|---|
| WO 2021198426 | A1 | 07-10-2021 | EP | 4128072 A1 | 08-02-2023 |
| | | | WO | 2021198426 A1 | 07-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2021074639 W

- EP 2021058631 W

**Non-patent literature cited in the description**

- **HINTON et al.** Distilling the knowledge in a neural network. *NIPS Deep Learning and Representation Learning Workshop,* 2015
- **HEO et al.** Knowledge distillation with adversarial samples supporting decision boundary. *Proceedings of the AAAI Conference on Artificial Intelligence,* 2019, vol. 33, 3771-3778
- **YIN et al.** Dreaming to distill: Data-free knowledge transfer via deepinversion. *Proceedings of the IEEE/CVF Conference on Computer Vision and Pattern Recognition,* 2020, 8715-8724
- **LIU et al.** Mnemonics training: Multi-class incremental learning without forgetting. *Proceedings of the IEEE/CVF Conference on Computer Vision and Pattern Recognition,* 2020, 12245-12254
- **REBUFFI et al.** icarl: Incremental classifier and representation learning. *Proceedings of the IEEE conference on Computer Vision and Pattern Recognition,* 2001-2010
- **MARCO A.F. PIMENTEL et al.** A review of novelty detection. *Signal Processing,* 2014, vol. 99, 215-249